# EUROPEAN PATENT SPECIFICATION

(11) **EP 0 547 938 B1**
(45) Date of publication and mention of the grant of the patent: **20.11.1996**
(21) Application number: 92403279.0
(22) Date of filing: 04.12.1992
(51) Int. Cl.: B23P 19/00, B23Q 17/12

(54) **Electronic damping system**
Elektronisches Dämpfungssystem
Système d'amortissement électronique

(30) Priority: 18.12.1991 US 808895
(43) Date of publication of application: 23.06.1993
(73) Proprietor: UNIVERSAL INSTRUMENTS CORPORATION (Delaware Corp.), Binghamton New York 13902-0825 (US)
(72) Inventor: York, James E., Endicott, New York 13760 (US)
(74) Representative: Keib, Gérard

(56) References cited:
- DE-B- 2 022 745
- US-A- 4 704 792
- US-A- 4 945 294
- US-A- 5 002 448

## Description

The present invention is directed to a system for electronically damping mechanical vibrations, and more particularly, to damping the mechanical vibrations caused by acceleration and deceleration incremental motion forces of a gantry beam positioning system.

It is known to use a circuit board assembly apparatus having at least one movable carriage, i.e., gantry beam, mounted via bearings on guide rails for movement in one direction over a printed circuit board, while at least one component gripping device is mounted on the movable carriage for movement along the carriage in another direction. This device allows x-y positioning of electronic components held in the gripping device relative to a printed circuit board. Such an assembly is shown, for example, in U.S. Patent N° 5,002,448.

The gantry beam is driven by a servo control system. To optimize manufacturing efficiency when mounting components on printed circuit boards, it is desirable to position the components as quickly as possible relative to the circuit board. However, such high speed operation produces undesirable vibrations, oscillations, resonances and the like in the gantry beam.

A particular problem is caused by the fact that the natural resonance frequencies of the gantry beam end change as the gantry beam load changes as the gripping device carried by the movable carriage traverses the beam. Thus, traditional systems for compensating for resonances, such as electronic notch filtering, would be very difficult to use in a gantry beam positioning system since the notch frequency setting would have to vary with the position of the load along the beam.

This problem is solved by a gantry beam positioning system comprising a movable gantry beam, a movable carriage mounted thereon and an electronic damping system for damping mechanical vibrations of the gantry beam according to claim 1, and a process for electronically damping mechanical vibrations of a gantry beam positioning system comprising a movable gantry beam and a movable carriage mounted thereon according to claim 10.

The present invention overcomes the above difficulties by creating a secondary velocity feedback loop for the main servo motor-tach velocity loop in which the resonance velocity of the beam is sensed, preferably from the movement of the end of the beam. The resonance velocity feedback signal is summed as negative feedback with the velocity command signal from the position controller. The resultant sum of the signals are combined to form the velocity reference input command signal to a servo power amplifier. This velocity feedback loop is preferably supplemental to the main servo motor-tach velocity loop in the servo power amplifier.

Other aspects of the invention are put forward in the dependent claims.

The above aspects of the invention are apparent from the accompanying drawings in which :
Figure 1 is a schematic block diagram of a preferred embodiment of the system in accordance with the present invention ;
Figure 2 is a schematic control loop diagram in accordance with the invention shown in Figure 1 ;
Figure 3A is a graphical representation of an experiment showing settle time of mechanical damping without electronic damping in accordance with the present invention ; and
Figure 3B is a graphical representation of an experiment showing the reduced settle time of mechanical damping with electronic damping in accordance with the present invention.

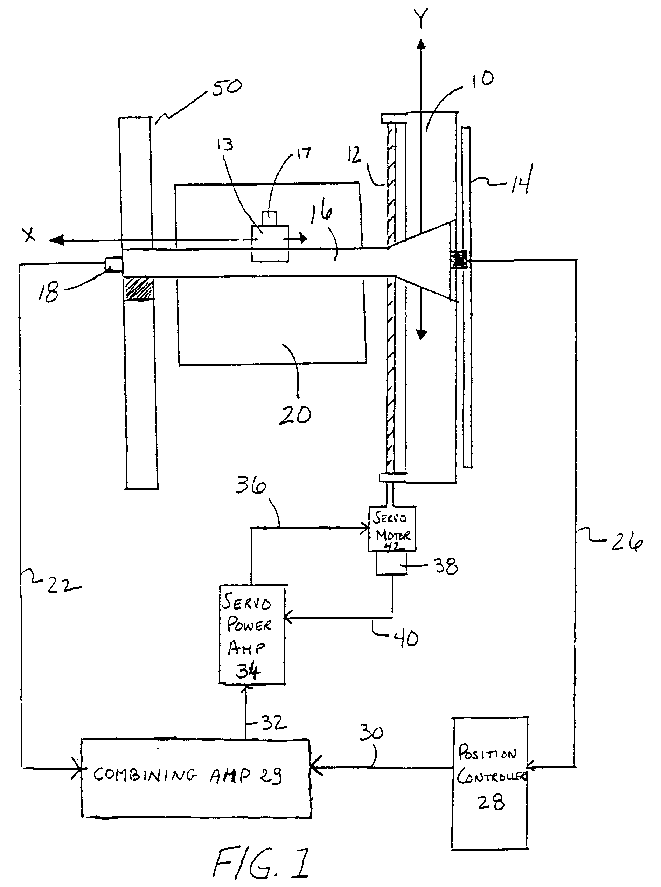

A gantry beam electronic damping system in accordance with the present invention is shown in Figure 1. Throughout the figures, like numerals are used to represent like elements.

The system includes a gantry beam 16 supported for controlled movement in the Y-direction between linear bearing supports 10 and 50 over a printed circuit board 20. Ball or feed screw 12 and linear scale 14 coupled to the support 10 act as a mechanical rotary to linear velocity linkage converter for controlling the movement of the gantry beam in the Y-direction. At least one component placement device or gripping device 17 is mounted for controlled movement in the X-direction along the length of gantry beam 16 by carriage 13.

Rotary tachometer 18 is disposed at the end of the gantry beam 16. Beam velocity resonant feedback signal 22 is output from the rotary tachometer 18 via adjustable combining means or amp 29. Together, a damping gain amp 24 and a summing junction 31 may form adjustable combining means 29.

A position feedback signal 26 is output from linear scale 14 to the position controller 28, and a velocity command signal 30 is output from the position controller to combining means 29. The velocity feedback signal 22 is summed as negative feedback with the velocity command signal 30 and the resultant sum of the signals forms velocity reference input command signal 32 which is input to servo power amp 34. This forms the secondary loop supplemental to the main servo motor-tach velocity loop. Servo power amp 34 drives servo motor 42, which in turn drives ball screw 12 to damp the vibrations of the beam, in a manner which will be described in greater detail below.

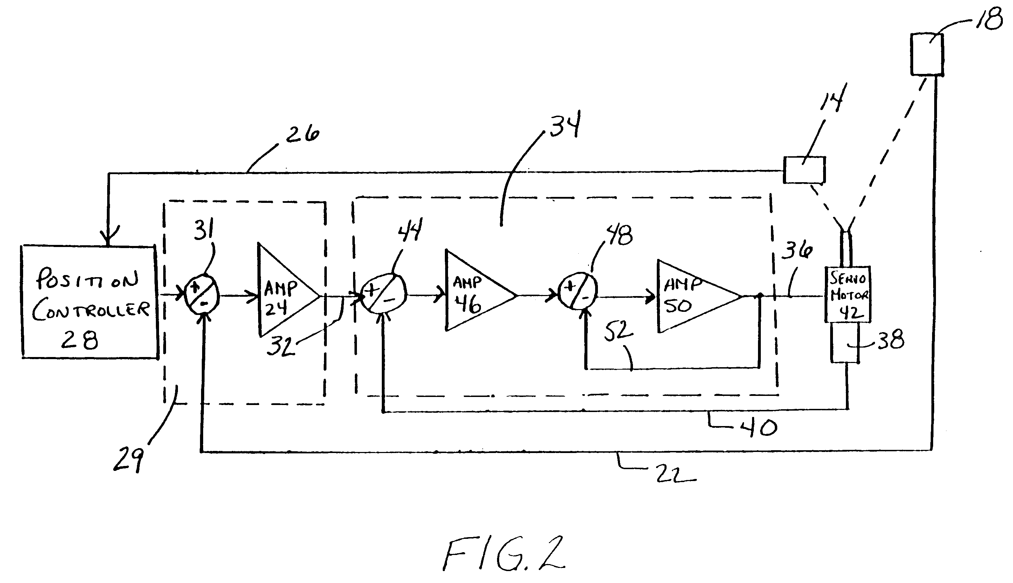

As shown in the control loop diagram in Figure 2, servo power amp 34 includes summing junction 44 which receives the tach feedback signal 40 from tachometer 38 coupled to servo motor 42. The tach feedback signal 40 and the velocity reference input command signal 32 are summed at summming junction 44, and the resulting signal is input to velocity loop error amplifier 46. The signal output from velocity loop error amplifier 46 and the current feedback signal 52 are summed at summing junction 48 and output to current loop error amplifier 50. The resultant drive signal 36 is output to servo motor 42. The amount of secondary loop gain is adjusted at damping gain amp 24 according to the optimum settling time requirements.

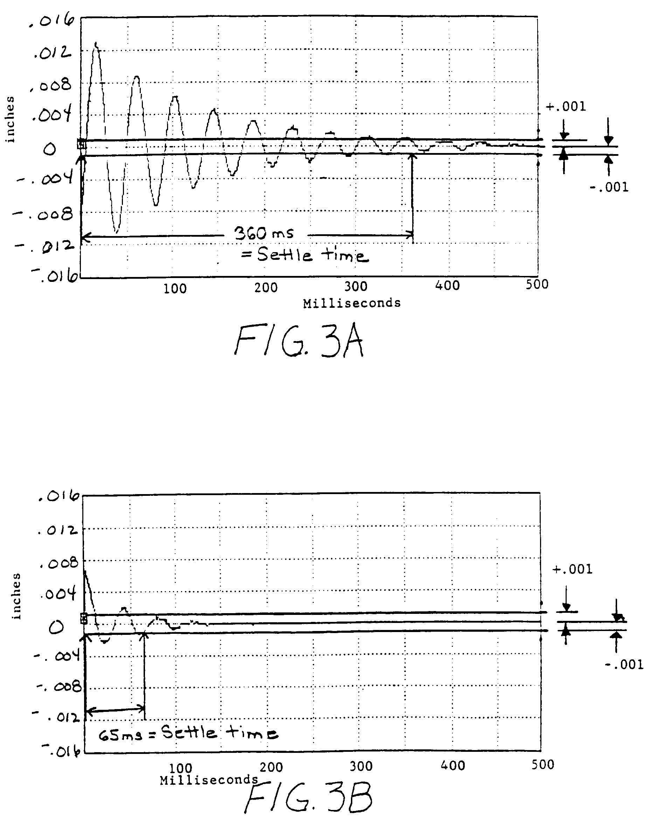

Figures 3A and 3B demonstrate the reduced settle time obtained using gantry beam electronic damping in accordance with the present invention. Experiments were conducted for a Y-axis displacement at .9 g's acceleration/deceleration and a selected carriage position. For purposes of the experiment, +- .001 inches (1 inch = 25.4 mm) around the commanded position destination, the Y-axis was considered to be "settled". Settling time data was taken after the position controller signalled "reference trajectory completed". With no electronic damping, as shown in Figure 3A, the mechanical settle time was 360 ms. mesured with a similar linear scale 14 mounted at end of gantry beam 16 opposite lead screw 12. With electronic damping in accordance with the present invention switched on, the mechanical settle time was 65 ms.

The above is for illustrative purposes only. Changes can be made in accordance with the invention as defined in the appended claims. For example, the invention is in no way limited for use with machines for mounting electronic components on circuit boards, but may be used in any environment in which undesirable vibrations occur.

For further example, it is also contemplated that the system may include a linear scale feedback device mounted at the end of the beam. A position controller can digitally derive the resonant velocity of the gantry beam end from change in position over change in time, and perform the function of gain amp 24 and summing junction 31 via software. The resultant signal, i.e., the velocity reference command signal 32 is then input to the servo power amp 34 as discussed above.

## Claims

1. A gantry beam positioning system comprising a movable gantry beam, a movable carriage mounted thereon and an electronic damping system for damping mechanical vibrations of the gantry beam, characterized in that it comprises :
velocity detecting means (18) for detecting the resonant velocity of the gantry beam (16) and outputting a velocity feedback signal (22) ; position detecting means (14) for detecting the position of the gantry beam (16) and outputting a position feedback signal (26) ;
means (29) for adjustably combining the resonant velocity feedback signal received from said velocity detecting means and the position feedback signal received from the position detecting means (14), wherein the resultant signal forms a velocity reference input command signal (32) input to a servo power amplifier (34).

2. A gantry beam positioning system according to claim 1, characterized in that it comprises one component placement device or gripping device (17) mounted on the movable carriage (13).

3. A gantry beam positioning system as one of the previous claims, characterized in that said resonant velocity detecting means is a tachometer (18).

4. A gantry beam positioning system as one of the previous claims, characterized in that said position detecting means is a linear scale (14).

5. A gantry beam positioning system as one of the previous claims, characterized in that said gantry beam (16) is accelerated and decelerated by motion forces imparted by a ball or feed screw (12) driven by a servo motor (42) controlled by said servo power amplifier (34).

6. A gantry beam positioning system as in claim 5, characterized in that said means (29) for adjustably combining includes a damping gain amplifier (24) and a first summing junction (31), and in that an optimum settling time for resonant vibrations is selected by adjusting the gain of said damping gain amplifier (24).

7. A gantry beam positioning system as in claim 6, characterized in that a tach feedback signal from a tachometer (38) coupled to said servo motor (42) and said resonant velocity reference input command signal (32) are summed at a second summing junction (44), and the resulting signal is input to a velocity loop error amplifier (46), and the signal output from said velocity loop error amplifier (46) and a current feedback signal (52) are summed at a third summing junction (48) and output to a current loop error amplifier (50).

8. A gantry beam positioning system as in claim 1, further comprising drive means coupled to said servo power amplifier (34) for driving said gantry beam (16), said drive means being disposed at an end of the gantry beam (16), said drive means being disposed at an end of the gantry beam (16) opposite said resonant velocity detecting means (18).

9. A gantry beam positioning system as in claim 8, characterized in that said position detecting means (12) is disposed at the same end of said gantry beam (16) as said drive means.

10. Process for electronically damping mechanical vibrations of a gantry beam positioning system comprising a movable gantry beam and a movable carriage mounted thereon, said process having the following steps:
detecting the resonant velocity of the gantry beam (16) and outputting a velocity feedback signal (22) ;
detecting the position of the gantry beam (16) and outputting a position feedback signal (26) ;
adjustably combining said resonant velocity feedback signal received from said velocity detection step and said position feedback signal received from said positive detection step, wherein the resultant signal forms a velocity reference input command signal (32) input to a servo power amplifier (34).

## Patentansprüche

1. Portalträger-Positionierungssystem mit einem bewegbaren Portalträger, einem bewegbaren, darauf gehaltenen Wagen und einem elektronischen Dämpfungssystem zum Dämpfen mechanischer Schwingungen des Portalträgers, gekennzeichnet durch:
ein Geschwindigkeitserfassungsmittel (18) zum Erfassen der Resonanzgeschwindigkeit des Portalträgers (16) und zum Ausgeben eines Geschwindigkeitsrückführsignals (22);
ein Positionserfassungsmittel (14) zum Erfassen der Position des Portalträgers (16) und zum Ausgeben eines Positionsrückführsignals (26);
ein Mittel (29) zum einstellbaren Verknüpfen des von dem Geschwindigkeitserfassungsmittel erhaltenen Resonanzgeschwindigkeit-Rückführsignals und des von dem Positionserfassungsmittel (14) erhaltenen Positionsrückführsignals, wobei das resultierende Signal ein Geschwindigkeitsreferenz-Eingabesteuersignal (32) bildet, das einem Servoleistungsverstärker (34) zugefügt wird.

2. Portalträger-Positionierungssystem nach Anspruch 1, dadurch gekennzeichnet, daß es eine Vorrichtung (17) zum Erfassen oder zum Einsetzen von Bauteilen aufweist, die auf dem bewegbaren Wagen (13) gehalten ist.

3. Portalträger-Positionierungssystem nach einem der vorangehenden Ansprüche, dadurch gekennzeichnet, daß das ResonanzgeSchwindigkeits-Erfassungsmittel ein Tachometer (18) ist.

4. Portalträger-Positionierungssystem nach einem der vorangehenden Ansprüche, dadurch gekennzeichnet, daß das Positionserfassungsmittel eine lineare Skala (14) ist.

5. Portalträger-Positionierungssystem nach einem der vorangehenden Ansprüche, dadurch gekennzeichnet, daß der Portalträger (16) durch Bewegungskräfte beschleunigt und verzögert wird, die durch eine Kugel- oder Vorschubschraube (12) eingeleitet werden, die von einem Servomotor (42) angetrieben wird, welcher von dem Servoleistungsverstärker (34) gesteuert wird.

6. Portalträger-Positionierungssystem nach Anspruch 5, dadurch gekennzeichnet, daß das Mittel (29) zum einstellbaren Verknüpfen einen Dämpfungsvorverstärker (24) und einen ersten Summierknoten (31) umfaß, und daß eine optimale Ausregelzeit für Resonanzschwingungen durch Einstellen des Verstärkungsfaktors des Dämpfungsvorverstärkers (24) ausgewählt wird.

7. Portalträger-Positionierungssystem nach Anspruch 6, dadurch gekennzeichnet, daß ein Tachometerrückführsignal von einem Tachometer (38), der mit dem Servomotor (42) gekoppelt ist, und das besagte Resonanzgeschwindigkeitsreferenz-Eingabesteuersignal (32) an einem zweiten Summierknoten (44) summiert werden, das resultierende Signal in einen Geschwindigkeitsschleifenfehlerverstärker (46) eingespeist wird und das von dem Geschwindigkeitsschleifenfehlerverstärker (46) abgegebene Signal sowie ein Stromrückführsignal (52) an einem dritten Summierknoten (48) sumiert und an einen Stromschleifenfehlerverstärker (50) abgegeben werden.

8. Portalträger-Positionierungssystem nach Anspruch 1, weiter umfassend ein Antriebsmittel, das mit dem Servoleistungsverstärker (34) zum Antreiben des Portalträgers (16) gekoppelt ist, wobei das Antriebsmittel an einem Ende des Portalträgers (16) gegenüber dem Resonanzgeschwindigkeitserfassungsmittel (18) angeordnet ist.

9. Portalträger-Positionierungssystem nach Anspruch 8, dadurch gekennzeichnet, daß das Positionserfassungsmittel (12) am gleichen Ende des Portalträgers (16) wie das Antriebsmittel angeordnet ist.

10. Verfahren zum elektronischen Dämpfen mechanischer Schwingungen eines Portalträger-Positionierungssystems mit einem bewegbaren Portalträger und einem bewegbaren, darauf gehaltenen Wagen, wobei das Verfahren folgende Schritte umfaßt:
Erfassen der Resonanzgeschwindigkeit des Portalträgers (16) und Abgeben eines Geschwindigkeitsrückführsignals (22);
Erfassen der Position des Portalträgers (16) und Abgeben eines Positionsrückführsignals (26);
einstellbares Verknüpfen des aus dem Geschwindigkeitserfassungsschritt erhaltenen Resonanzgeschwindigkeits-Rückführsignals und des aus dem Positionserfassungsschritt erhaltenen Positionsrückführsignals, wobei die resultierenden Signale ein Geschwindigkeitsreferenz-Eingabesteuersignal (32) bilden, welches einem Servoleistungsverstärker (34) zugeführt wird.

## Revendications

1. Système de positionnement d'une poutre formant portique, comprenant une poutre formant portique déplaçable, un chariot déplaçable monté sur ladite poutre, et un système électronique d'amortissement pour amortir les vibrations mécaniques de la poutre formant portique, caractérisé en ce qu'il comprend :
- des moyens (18) de détection de vitesse, pour détecter la vitesse de résonance de la poutre formant portique (16) et pour émettre un signal de rétroaction (22) de vitesse ;
- des moyens (14) de détection de position pour détecter la position de la poutre formant portique (16) et émettre un signal de rétroaction (26) de position ;
- des moyens (29) pour combiner de manière réglable le signal de rétroaction de vitesse de résonance reçu des moyens de détection de vitesse, et le signal de rétroaction de position reçu des moyens (14) de détection de position, le signal résultant formant un signal (32) de commande d'entrée de référence de vitesse qui est injecté dans un amplificateur (34) de réglage de puissance.

2. Système de positionnement d'une poutre formant portique selon la revendication 1, caractérisé en ce qu'il comprend un dispositif (17) de mise en place ou de saisie d'un composant, monté sur le chariot déplaçable (13).

3. Système de positionnement d'une poutre formant portique selon l'une des revendications précédentes, caractérisé en ce que les moyens de détection de la vitesse de résonance sont constitués par une génératrice tachymétrique (18).

4. Système de positionnement d'une poutre formant portique selon l'une des revendications précédentes, caractérisé en ce que les moyens de détection de position sont constitués par une échelle linéaire (14).

5. Système de positionnement d'une poutre formant portique selon l'une des revendications précédentes, caractérisé en ce que la poutre formant portique (16) est accélérée et décélérée par des forces motrices communiquées par une vis (12) à bille ou sans fin entraînée par un servomoteur (42) commandé par ledit amplificateur (34) de réglage de puissance.

6. Système de positionnement d'une poutre formant portique selon la revendication 5, caractérisé en ce que les moyens (29) pour combiner de façon réglable comprennent un amplificateur (24) de gain d'amortissement et une première jonction de sommation (31), et en ce qu'un temps optimal de cessation des vibrations de résonance est sélectionné en réglant le gain de l'amplificateur (24) du gain d'amortissement.

7. Système de positionnement d'une poutre formant portique selon la revendication 6, caractérisé en ce qu'un signal de rétroaction tachymétrique venant d'une génératrice tachymétrique (38) couplée au servomoteur (42) et le signal (32) de commande d'entrée de référence de vitesse de résonance sont additionnés dans une seconde jonction de sommation (44), et le signal résultant est introduit dans un amplificateur (46) d'erreur de boucle de vitesse, et le signal venant de l'amplificateur (46) d'erreur de boucle de vitesse et un signal de rétroaction (52) de courant sont additionnés dans une troisième jonction de sommation (48) et sont envoyés à un amplificateur (50) d'erreur de boucle de courant.

8. Système de positionnement de poutre formant portique selon la revendication 1, comprenant en outre des moyens d'entraînement couplés à l'amplificateur (34) de réglage de puissance pour entraîner la poutre formant portique (16), les moyens d'entraînement étant disposés à une extrémité de la poutre formant portique (16) les moyens d'entraînement étant disposés à une extrémité de la poutre formant portique (16) opposée aux moyens (18) de détection de la vitesse de résonance.

9. Système de positionnement de poutre formant portique selon la revendication 8, caractérisé en ce que les moyens (12) de détection de position sont disposés à la même extrémité de la poutre formant portique (16) que les moyens d'entraînement.

10. Procédé pour amortir électroniquement les vibrations mécaniques d'un système de positionnement d'une poutre formant portique comprenant une poutre formant portique déplaçable et un chariot déplaçable monté sur ladite poutre, ce procédé comportant les étapes suivantes :
- on détecte la vitesse de résonance de la poutre formant portique (16), et on émet un signal de rétroaction (22) de vitesse ;
- on détecte la position de la poutre formant portique (16) et on émet un signal de rétroaction (26) de position ;
- on combine de façon réglable le signal de rétroaction de vitesse de résonance reçu de l'étape de détection de vitesse et le signal de rétroaction de position reçu de l'étape de détection de position, le signal résultant formant un signal (32) de commande d'entrée de référence de vitesse que l'on envoie à un amplificateur (34) de réglage de puissance.
